# EUROPÄISCHE PATENTANMELDUNG

(11) **EP 4 443 721 A1**
(43) Veröffentlichungstag der Anmeldung: **09.10.2024**
(21) Anmeldenummer: 23166982.1
(22) Anmeldetag: 06.04.2023
(51) Int. Cl.: H02K 15/06

(54) **FÜGEVERFAHREN UND FÜGEVORRICHTUNG ZUM EINFÜGEN EINER SPULENWICKLUNG IN EIN BAUTEIL EINER ELEKTRISCHEN MASCHINE**

(71) Anmelder: Grob-Werke GmbH & Co. KG, 87719 Mindelheim (DE)
(72) Erfinder: Schmölz, Markus, 87668 Rieden (DE); Ziegler, Manfred, 86856 Hiltenfingen (DE)
(74) Vertreter: KASTEL Patentanwälte PartG mbB

(57) **Zusammenfassung**

Um ein prozesssicheres Einfügen einer Spulenwicklung in ein Bauteil einer elektrischen Maschine im Rahmen einer Großserienproduktion zu ermöglichen, schafft die Erfindung ein Fügeverfahren zum Einfügen einer Spulenwicklung (12) in ein Bauteil (16) einer elektrischen Maschine, umfassend:
a) Bereitstellen des Bauteils (16) mit einer ringförmigen Anordnung (34) von nach innen öffnenden Nuten (14), die durch nach innen ragende Nutbegrenzungen (36) begrenzt sind,
b) Bereitstellen der mit einem Spulendurchmesser, der gleich einem oder kleiner als ein Innendurchmesser der ringförmigen Anordnung (34) ist, aufgewickelten Spulenwicklung (12) innerhalb der ringförmigen Anordnung (34), wobei die Spulenwicklung (12) eine Vielzahl geradliniger Leitungsabschnitte (38), die durch Wicklungsköpfe (40) verbunden sind, aufweist,
c) Bereitstellen von radial beweglichen Stützfingern (28) axial neben den Nutbegrenzungen (36),
d) Expandieren der Spulenwicklung (12) nach außen unter Einführen der Leiterabschnitte (38) der Spulenwicklung (12) in die Nuten (14), und
e) Mitbewegen der Stützfinger (28) radial mit der Spulenwicklung (12), um Leiterabschnitte (38) und/oder Wicklungsköpfe (40) beim Einfügen zu führen.

## Beschreibung

Die Erfindung betrifft ein Fügeverfahren zum Einfügen einer Spulenwicklung in ein Bauteil einer elektrischen Maschine. Weiter betrifft die Erfindung eine Fügevorrichtung zum Einfügen einer Spulenwicklung in ein Bauteil einer elektrischen Maschine. Weiter betrifft die Erfindung eine Anordnung aus der Fügevorrichtung, dem Bauteil und der Spulenwicklung. Weiter betrifft die Erfindung eine Steuerung für die Fügevorrichtung und ein Computerprogramm dafür.

Zum technologischen Hintergrund und zum Stand der Technik wird auf folgende Literaturstellen verwiesen:
[1] WO 2019/020148 A1
[2] WO 2020/187363 A1
[3] WO 2019/166060 A1
[4] WO 2019/166061 A1
[5] WO 2017/102892 A2
[6] DE 10 2020 130 647 A1
[7] EP 3 886 303 A1
[8] GB 1 027 777 A
[9] GB 639 069 A
[10] WO 2018/019970A1
[11] DE 10 2020 117 771 A1
[12] DE 10 2021 134 599 A1
[13] DE 10 2020 130 647 A1
[14] DE 10 2018 108 615 A1
[15] DE 10 2018 103 926 A1

Aus [1], [3], [4], [6] sind Verfahren und Vorrichtungen Herstellen einer Spulenwicklung, insbesondere Spulenpaket mit wenigstens einer Wellenwickelmatte, sowie eine damit herstellbare Spulenwicklung bekannt, wie sie auch bei Ausführungsformen der Erfindung verwendet werden. Aus [2], [5], [7] und [10] sind Fügewerkzeuge - insbesondere Fügedorne - zum Übertragen der Spulenwicklung in ein Blechpaket eines Stators sowie Verfahren und Vorrichtungen zum Aufbringen der Spulenwicklung auf das Fügewerkzeug bekannt. Aus [5] und [10] sind darüber hinaus auch eine Vorrichtung und ein Verfahren zum Einfügen der aus Rechteckdraht gebildeten Spulenwicklung von dem Fügewerkzeug in die Nuten des Blechpakets bekannt. Dabei werden Wellenwicklungen, bei denen der Abstand zwischen geradlinigen Leiterabschnitten in Umfangsrichtung dem Nutabstand am Statorblechpaket entspricht, am Fügewerkzeug derart unter Spannung gehalten, dass ihr Durchmesser gegenüber dem entspannten Zustand geringer ist. Beim Einfügen expandieren die Wellenwicklungen wieder, so dass sie in den Statornuten nicht oder nur gering unter Spannung stehen. Weiter wird eine Gruppe geradliniger Leiterabschnitte über einen sich radial nach außen bewegenden Schieber, z.B. Expandierblech, nach außen in eine Nut am Statorblechpaket gefügt. Damit können in der Nut übereinander liegende geradlinige Leiterabschnitte überführt werden. Allerdings ist die Flächenpressung recht hoch, so dass Drahtbeschädigungen nicht immer ausgeschlossen werden können. Die Literaturstellen [1] bis [7] betreffen insbesondere Spulenwickelungen mit Rechteckdraht zum Schaffen eines hohen Füllgrades der Statornuten.

Demnach ist zur Herstellung eines Stators mit Wellenwicklung, auch Endloshairpin genannt, unter anderem die Variante bekannt, dass die gesamte Wicklung, oder ein Teil der Wicklung, auf ein Fügewerkzeug aufgebracht wird, und von diesem Fügewerkzeug, das z.B. als Fügedorn ausgeführt, in den Stator übertragen wird. Das Übertragen in den Stator kann in verschiedenen Verfahrensvarianten erfolgen.

Aus [8] und [9] sind andere Verfahren und Vorrichtungen zum Einfügen von aus Runddrähten um ein Fügewerkzeug gewickelten Wicklungen in Wicklungsnuten zwischen Polschuhen bekannt. Auch hier kann es beim Überführen der Drähte in die Wicklungsnuten zu Drahtbeschädigungen kommen.

Die Erfindung hat sich zur Aufgabe gestellt, das Einfügen einer Spulenwicklung in ein Bauteil einer elektrischen Maschine prozesssicherer zu gestalten.

Zum Lösen dieser Aufgabe schafft die Erfindung ein Fügeverfahren gemäß Anspruch 1. Eine Fügevorrichtung, eine damit versehene Anordnung, eine Steuerung dafür sowie ein Computerprogramm dafür sind Gegenstand der weiteren unabhängigen Ansprüche.

Vorteilhafte Ausgestaltungen sind Gegenstand der Unteransprüche.

Die Erfindung schafft gemäß einem ersten Aspekt davon ein Fügeverfahren zum Einfügen einer Spulenwicklung in ein Bauteil einer elektrischen Maschine, umfassend:
a) Bereitstellen des Bauteils mit einer ringförmigen Anordnung von nach innen öffnenden Nuten, die durch nach innen ragende Nutbegrenzungen begrenzt sind,
b) Bereitstellen der mit einem Spulendurchmesser, der gleich einem oder kleiner als ein Innendurchmesser der ringförmigen Anordnung ist, aufgewickelten Spulenwicklung innerhalb der ringförmigen Anordnung, wobei die Spulenwicklung eine Vielzahl geradliniger Leitungsabschnitte, die durch Wicklungsköpfe verbunden sind, aufweist,
c) Bereitstellen von radial beweglichen Stützfingern axial neben den Nutbegrenzungen,
d) Expandieren der Spulenwicklung nach außen unter Einführen der Leiterabschnitte der Spulenwicklung in die Nuten, und
e) Mitbewegen der Stützfinger radial mit der Spulenwicklung, um Leiterabschnitte und/oder Wicklungsköpfe beim Einfügen zu führen.

Vorzugsweise umfasst Schritt a) den Schritt:
a1) Bereitstellen eines ringförmigen Grundkörpers eines Stators.

Vorzugsweise umfasst Schritt a) den Schritt:
a2) Bereitstellen eines Blechpakets eines Stators.

Vorzugsweise umfasst Schritt a) den Schritt:
a3) Bereitstellen des Bauteils mit Isolationspapieren in den einzelnen Nuten.

Vorzugsweise umfasst Schritt b) den Schritt:
b1) Bereitstellen einer aus einzelnen Wellenwicklungsdrähten gebildeten Spulenmatte zum Bilden der Spulenwicklung.

Vorzugsweise umfasst Schritt b) den Schritt:
b2) Bereitstellen der Spulenwicklung aus Drähten mit rechteckigem Drahtquerschnitt.

Vorzugsweise umfasst Schritt b) den Schritt:
b3) Bereitstellen der Spulenwicklung aus Drähten mit Isolierschicht.

Vorzugsweise umfasst Schritt b) den Schritt:
b4) Bereitstellen der Spulenwicklung auf einem Fügewerkzeug, das in den Innenraum innerhalb des Bauteils mit der ringförmigen Anordnung von nach innen offenen Nuten eingefügt wird.

Vorzugsweise umfasst Schritt b) den Schritt:
b5) Komprimieren der Spulenmatte mit geringerem Durchmesser auf einem Fügedorn als Fügewerkzeug.

Vorzugsweise umfasst Schritt b) den Schritt:
b6) Bereitstellen der Spulenmatte derart, dass die geradlinigen Leiterabschnitte in Fügewerkzeugnuten zwischen radial beweglichen Führungselementen eingefügt sind.

Vorzugsweise umfasst Schritt c) den Schritt:
c1) Bereitstellen je eines Stützfingers pro Nutbegrenzung des Bauteils.

Vorzugsweise umfasst Schritt c) den Schritt:
c2) Bereitstellen von keilförmigen Stützfingern, die von radial außen nach radial innen gesehen verjüngt ausgebildet sind.

Vorzugsweise umfasst Schritt c) den Schritt:
c3) Bereitstellen der Stützfinger mit einer ersten und einer zweiten Seitenfläche, die im Wesentlichen in axialer und radialer Richtung verlaufen und sich von radial außen nach radial innen gesehen einander annähern.

Vorzugsweise umfasst Schritt c) den Schritt:
c4) Bereitstellen von Stützfingern in einer Grundstellung derart, dass sie jeweils eine in die axiale Richtung weisende Endfläche einer der Nutbegrenzungen vollständig überdecken.

Vorzugsweise umfasst Schritt c) den Schritt:
c5) Bereitstellen von Stützfingern in einer Grundstellung derart, dass Seitenflächen der Stützfinger, die im Wesentlichen in axialer und radialer Richtung verlaufen, mindestens mit zur Mitte der Nut hin weisenden Nutseiten fluchten oder in Umfangsrichtung über Kanten der Nutbegrenzungen und/oder über die zur Mitte der Nut hin weisenden Nutseiten hinweg zur Mitte der jeweils begrenzten Nut hin vorstehen.

Vorzugsweise umfasst Schritt c) den Schritt:
c6) Bereitstellen von Stützfingern mit abgerundeten oder an Eckkanten abgeflachten im Wesentlichen in Axialrichtung weisenden Oberseiten.

Vorzugsweise umfasst Schritt c) den Schritt:
c7) Bereitstellen einer ringförmigen Anordnung von Stützfingern an einem Stützfingerbewegungsmechanismus zur radialen Bewegung der Stützfinger.

Vorzugsweise werden die Stützfinger derart bereitgestellt, dass sie beim Expandieren axial zwischen Wicklungsköpfen der Spulenwicklung und den Nutbegrenzungen eingreifen. Vorzugsweise stützen sich Drähte der Spulenwicklung mit Übergangsbereichen zwischen in den Nuten einzufügenden geradlinigen Drahtabschnitten und dachförmigen Wicklungsköpfen an Seitenflächen und von dem Bauteil weg gerichteten Oberflächen der Stützfinger ab.

Vorzugsweise umfasst Schritt d) den Schritt:
d1) Auferlegen einer radial nach außen gerichteten Kraft auf Leiter der Spulenwicklung, um diese radial nach außen zu expandieren und in die Nuten einzufügen.

Vorzugsweise umfasst Schritt c) den Schritt:
d2) Auferlegen einer radial gerichteten Kraft auf Wellenwicklungsköpfe der Spulenwicklung.

Vorzugsweise umfasst Schritt e) die folgende Reihenfolge von Schritten:
e1) Mitbewegen der Stützfinger mit der Spulenwicklung aus einer Grundstellung über eine Teilstrecke bis zu einer radialen Zwischenposition zwischen der radial nach innen offenen Mündung und dem radial außen liegenden Nutgrund der zugeordneten Nut;
e2) Zurückführen der Stützfinger aus der Zwischenposition in die Grundstellung oder in eine weitere, der Grundstellung näher liegende Zwischenposition; und
e3) Wiederholen der Schritte e1) und e2).

Vorzugsweise werden die Schritte e1) und e2) derart durchgeführt, dass in der Grundstellung Leiter der Spulenwicklung an Seitenflächen der Stützfinger, die im Wesentlichen in axialer und radialer Richtung verlaufen, anliegen und in der Zwischenposition die Leiter immer noch an den Seitenfläche anliegen oder an zur Nutmitte hin weisenden Nutwänden anliegen und beim Zurückführen der Stützfinger an deren Seitenflächen in Umfangsrichtung gedrängt werden.

Gemäß einem weiteren Aspekt schafft die Erfindung eine Fügevorrichtung zum Einfügen einer Spulenwicklung in ein Bauteil einer elektrischen Maschine, umfassend:
eine Halterung für das Bauteil, das mit einer ringförmigen Anordnung von nach innen öffnenden Nuten, die durch nach innen ragende Nutbegrenzungen begrenzt sind, versehen ist;
eine Fügeeinrichtung mit einem Fügewerkzeug, das zum Anordnen der mit einem Spulendurchmesser, der gleich einem oder kleiner als ein Innendurchmesser der ringförmigen Anordnung ist, aufgewickelten Spulenwicklung, die eine Vielzahl geradliniger Leitungsabschnitte, die durch Wicklungsköpfe verbunden sind, innerhalb der ringförmigen Anordnung ausgebildet ist, wobei die Fügeeinrichtung zum Expandieren der Spulenwicklung nach außen unter Einführen der Leiterabschnitte der Spulenwicklung in die Nuten ausgebildet ist,
eine Anordnung von radial beweglichen Stützfingern axial neben den Nutbegrenzungen und einen Stützfingerbewegungsmechanismus zum radialen Bewegen der Stützfinger,
und eine Steuerung, die dazu ausgebildet ist, den

Stützfingerbewegungsmechanismus abhängig von der Expansionsbewegung durch die Spulenwicklung mittels der Fügeeinrichtung derart zu steuern, dass sich die Stützfinger radial mit der Spulenwicklung mitbewegen, um Leiterabschnitte und/oder Wicklungsköpfe beim Einfügen zu führen.

Es ist bevorzugt, dass die Anordnung von Stützfingern je einen Stützfinger pro Nutbegrenzung des Bauteils aufweist.

Es ist bevorzugt, dass die Anordnung von Stützfingern keilförmige Stützfinger aufweist, die von radial außen nach radial innen gesehen verjüngt ausgebildet sind.

Es ist bevorzugt, dass die Anordnung von Stützfingern Stützfinger mit einer ersten und einer zweiten Seitenfläche, die im Wesentlichen in axialer und radialer Richtung verlaufen und sich von radial außen nach radial innen gesehen einander annähern, aufweist.

Es ist bevorzugt, dass die Anordnung von Stützfingern zum Zustellen der Stützfinger in einer Grundstellung derart ausgebildet ist, dass die Stützfinger jeweils eine in die axiale Richtung weisende Endfläche der jeweiligen Nutbegrenzungen vollständig überdecken.

Es ist bevorzugt, dass die Anordnung von Stützfingern zum Zustellen der Stützfinger in einer Grundstellung derart ausgebildet ist, dass Seitenflächen der Stützfinger, die im Wesentlichen in axialer und radialer Richtung verlaufen, mindestens mit zur Mitte der Nut hin weisenden Nutseiten fluchten. Vorzugsweise stehen diese Seitenflächen der Stützfinger in Umfangsrichtung über Kanten der Nutbegrenzungen hinweg zur Mitte der jeweils begrenzten Nut hin vor. Vorzugsweise stehen diese Seitenflächen der Stützfinger über die zur Mitte der Nut hin weisenden Nutseiten hinweg zur Mitte der jeweils begrenzten Nut hin vor.

Es ist bevorzugt, dass die Anordnung von Stützfingern Stützfinger mit abgerundeten oder an Eckkanten abgeflachten im Wesentlichen in Axialrichtung weisenden Oberseiten aufweisen.

Vorzugsweise ist die Steuerung dazu ausgebildet, den
Stützfingerbewegungsmechanismus anzusteuern zum
e1) Mitbewegen der Stützfinger mit der mittels der Fügeeinrichtung expandierten Spulenwicklung aus einer Grundstellung über eine Teilstrecke der radialen Expansionsbewegung bis zu einer Zwischenposition,
e2) Zurückführen der Stützfinger aus der Zwischenposition in die Grundstellung oder in eine weitere, der Grundstellung näher liegende Zwischenposition und
e3) Wiederholen der Schritte e1) und e2).

Vorzugsweise ist die Steuerung dazu ausgebildet, den Stützfingerbewegungsmechanismus derart anzusteuern, dass in der Grundstellung Leiter der Spulenwicklung an Seitenflächen der Stützfinger, die im Wesentlichen in axialer und radialer Richtung verlaufen, anliegen und in der Zwischenposition die Leiter immer noch an den Seitenfläche anliegen oder an zur Nutmitte hin weisenden Nutwänden anliegen und beim Zurückführen der Stützfinger an deren Seitenflächen in Umfangsrichtung gedrängt werden. Gemäß einem weiteren Aspekt schafft die Erfindung eine Anordnung umfassend eine Fügevorrichtung nach einer der voranstehenden Ausgestaltungen, das Bauteil mit der ringförmigen Anordnung nach innen öffnender Nuten und die in das Bauteil mittels der Fügevorrichtung einzufügende Spulenwicklung.

Vorzugsweise ist das Bauteil ein ringförmiger Grundkörper eines Stators. Vorzugsweise ist das Bauteil ein Blechpaket eines Stators. Vorzugsweise weist das Bauteil Isolationspapiere in den einzelnen Nuten auf. Vorzugsweise weist die Spulenwicklung eine aus einzelnen Wellenwicklungsdrähten gebildete Spulenmatte auf. Vorzugsweise weist die Spulenwicklung eine Spulenmatte aus Drähten mit rechteckigem Drahtquerschnitt auf. Vorzugsweise weist die Spulenwicklung eine Spulenmatte aus Drähten mit Isolierschicht auf.

Gemäß einem weiteren Aspekt schafft die Erfindung eine Steuerung für eine Fügevorrichtung oder eine Anordnung nach einer voranstehenden Ausgestaltungen, wobei die Steuerung dazu eingerichtet ist, die Fügevorrichtung zum Durchführen des Fügeverfahrens nach einer der oben beschriebenen Ausgestaltungen anzusteuern.

Gemäß einem weiteren Aspekt schafft die Erfindung ein Computerprogramm, umfassend Anweisungen, die die Fügevorrichtung nach einer der voranstehenden Ausgestaltungen oder die Fügevorrichtung der Anordnung nach einer der voranstehenden Ausgestaltungen dazu veranlassen, das Fügeverfahren nach einer oben beschriebenen Ausgestaltungen durchzuführen.

Bevorzugte Ausführungsformen der Erfindung betreffen eine Ablaufstrategie zur Reduzierung der Expandierkraft beim Einfügen von Spulenwicklungen in eine E-Maschinenbauteil wie insbesondere einen Stator oder Rotor.

Ein Ausführungsbeispiel wird im Folgenden anhand der beigefügten Zeichnungen näher erläutert. Darin zeigt:
- Fig. 1: eine Anordnung einer Fügevorrichtung, eines Bauteils und einer Spulenwicklung, wobei die auf ein Fügewerkzeug der Fügevorrichtung aufgewickelte Spulenwicklung und das Bauteil nebeneinander dargestellt sind;
- Fig. 2: die Anordnung von Fig. 1, wobei das Fügewerkzeug mit komprimierter Spulenwicklung in das Bauteil eingefügt ist;
- Fig. 3: einen Schnitt durch einen Umfangsteilbereich der Anordnung;
- Fig. 4: eine perspektivische Ansicht des Umfangsteilbereichs der Anordnung von Fig. 1 zur Verdeutlichung des Fügevorgangs, wobei zu Darstellungszwecken nur einige der einzuführenden Drähte der Spulenwicklung gezeigt sind;
- Fig. 5: eine Darstellung wie in Fig. 4, wobei zusätzlich als weitere Teile der Fügevorrichtung eine Anordnung von radial beweglichen Stützfingern, ein Stützfingerbewegungsmechansimus zum radialen Bewegen der Stützfinger und eine Steuerung angedeutet sind;
- Fig. 6: eine schematische stark vereinfachte axiale Draufsicht auf die Anordnung aus Bauteil, Fügevorrichtung und Spulenwicklung bei einem ersten Schritt eines Expansionsvorganges;
- Fig. 7: eine Ansicht wie in Fig. 6 bei einem nachfolgenden zweiten Schritt des Expansionsvorganges;
- Fig. 8: eine Ansicht wie in Fig. 6 und 7 bei einem nachfolgenden dritten Schritt des Expansionsvorganges; und
- Fig. 9: eine Ansicht wie in Fig. 6 bis 8 bei einem nachfolgenden vierten Schritt des Expansionsvorganges.

Im Folgenden werden Ausführungsbeispiele für ein Fügeverfahren und eine Fügevorrichtung 10 zum Einbringen einer Spulenwicklung 12, insbesondere in Form einer Wellenwicklung, in Nuten 14 eines Bauteils 16 einer elektrischen Maschine, wie z.B. eines Blechpakets 18 eines Stators 20, näher beschrieben.

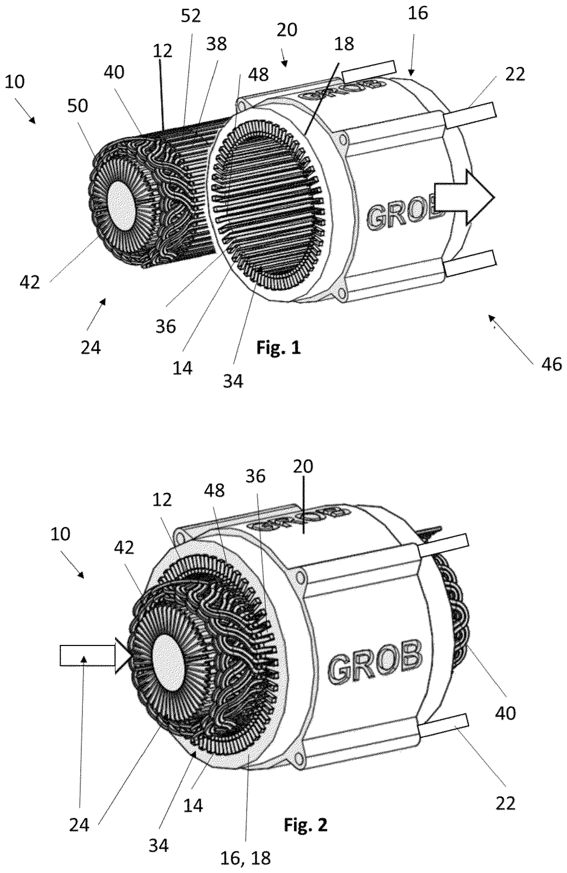

Wie aus den Fig. 1 bis 3 und 5 ersichtlich, ist die Fügevorrichtung 10 zum Einfügen einer Spulenwicklung 12 in ein Bauteil 16 einer elektrischen Maschine ausgebildet und weist eine Halterung 22, eine Fügeeinrichtung 24, eine Anordnung 26 von Stützfingern 28, einen Stützfingerbewegungsmechanismus 30 und eine Steuerung 32 auf.

Das Bauteil 16 ist mit einer ringförmigen Anordnung 34 von nach innen öffnenden Nuten 14, die durch nach innen ragende Nutbegrenzungen 36 begrenzt sind, versehen.

Die Spulenwicklung 12 weist eine Vielzahl geradliniger Leitungsabschnitte 38 auf, die durch Wicklungsköpfe 40 verbunden sind.

Die Fügeeinrichtung 24 weist ein Fügewerkzeug 42 auf. Das Fügewerkzeug 42 ist dazu ausgebildet, die Spulenwicklung 12 innerhalb der ringförmigen Anordnung 34 anzuordnen. Die Spulenwicklung 12 ist hierzu mit einem kleineren Spulendurchmesser, der gleich oder kleiner als der Innendurchmesser der Anordnung 34 von Nuten 14, also hier insbesondere gleich oder vorzugsweise kleiner als der Innendurchmesser des Blechpakets 18, ist, auf das Fügewerkzeug 42 aufgewickelt. Weiter ist das Fügewerkzeug 42 dazu ausgebildet, die so eingebrachte Spulenwicklung 12 nach außen zu expandieren, wobei die geradlinigen Leiterabschnitte 38 der Spulenwicklung 12 in die Nuten 14 eingefügt werden.

Die Stützfinger 28 der Anordnung 26 von Stützfingern sind radial beweglich und axial neben den Nutbegrenzungen 36 angeordnet. Der Stützfingerbewegungsmechanismus 30 ist zum radialen Bewegen der Stützfinger 28 ausgebildet.

Die Steuerung 30 ist dazu ausgebildet, den Stützfingerbewegungsmechanismus 30 abhängig von der Expansionsbewegung, mit der die Spulenwicklung 12 mittels der Fügeeinrichtung 24 expandiert wird, derart zu steuern, dass sich die Stützfinger 28 radial mit der Spulenwicklung 12 mitbewegen, um Leiterabschnitte 38 und/oder Wicklungsköpfe 40 beim Einfügen zu führen.

Das Fügeverfahren dient zum Einfügen der Spulenwicklung 12 in das Bauteil 16 einer elektrischen Maschine, und umfasst die Schritte:
a) Bereitstellen des Bauteils 16 mit der ringförmigen Anordnung 34 von nach innen öffnenden Nuten 14, die durch nach innen ragende Nutbegrenzungen 36 begrenzt sind,
b) Bereitstellen der mit dem Spulendurchmesser, der gleich dem oder kleiner als der Innendurchmesser der ringförmigen Anordnung 34 ist, aufgewickelten Spulenwicklung 12 innerhalb der ringförmigen Anordnung 34,
c) Bereitstellen der radial beweglichen Stützfingern 28 axial neben den Nutbegrenzungen 36,
d) Expandieren der Spulenwicklung 12 nach außen unter Einführen der Leiterabschnitte 38 der Spulenwicklung in die Nuten 14, und
e) Mitbewegen der Stützfinger 28 radial mit der Spulenwicklung 12, um Leiterabschnitte 38 und/oder Wicklungsköpfe 40 beim Einfügen zu führen.

Insbesondere ist die Steuerung 32 dazu ausgebildet, die Fügevorrichtung 10 zum Durchführen des Fügeverfahrens anzusteuern. Die Steuerung 32 ist hierzu als elektronische Steuerung mit einer Recheneinheit mit entsprechendem Computerprogramm ausgebildet.

Wie man insbesondere Fig. 1 bis 5 entnehmen kann, umfasst die als Wellenwicklung ausgebildete Spulenwicklung 12 vorher mäanderförmig gebogene und mit einer Isolatorschicht versehene Leiter 44.1, 44.2, 44.3, 44.4, wie insbesondere Drähte, die die geradlinige Leiterabschnitte 38 und etwa dachförmige Biegungsabschnitte - sogenannte Wicklungsköpfe 40 - dazwischen aufweisen. Die Spulenwicklung 12 liegt zum Beispiel als Wellenwickelmatte vor, wie sie in [1], [3], [4] oder [6] beschrieben und gezeigt wird. Es wird für nähere Einzelheiten für die Wicklung ausdrücklich auf diese Literaturstellen verwiesen.

Wie in Fig. 1 bis 3 gezeigt, wird die Spulenwicklung 12 zunächst, wie dies in [2], [5], [10] oder [7] beschrieben und gezeigt ist, auf die Fügeeinrichtung 24 zum Übertragen der Wicklung in das Blechpaket 14 aufgebracht. Es wird für nähere Einzelheiten bezüglich des allgemeinen Aufbaus der Fügeeinrichtung 24 und eines als Fügewerkzeug 42 (auch Fügedorn genannt) ausgebildeten Wicklungsträger desselben ausdrücklich auf diese Literaturstellen [2], [5] und insbesondere [10] verwiesen. Dabei werden Wellenwicklungen, bei denen der Abstand zwischen geradlinigen Leiterabschnitten 38 in Umfangsrichtung dem Nutabstand am Blechpaket 18 entspricht, am Fügewerkzeug 42 derart unter Spannung gehalten, dass ihr Spulendurchmesser gegenüber dem entspannten Zustand geringer ist. Beim Einfügen expandieren die Wellenwicklungen wieder, so dass sie in den Nuten 14 nicht oder nur gering unter Spannung stehen.

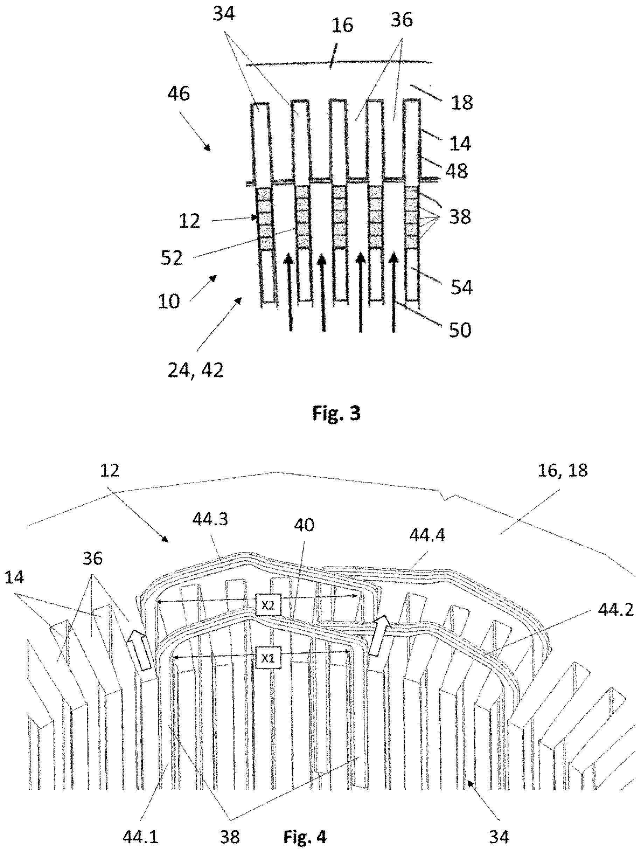

Fig. 1 zeigt eine Anordnung 46 aus Fügevorrichtung 10, Bauteil 16 und Spulenwicklung 12. Insbesondere zeigt Fig. 1 das Fügewerkzeug 42 und das Blechpaket 18 nebeneinander angeordnet. Fig. 2 zeigt einen Verbund dieser Teile, wobei das Fügewerkzeug 42 in das Blechpaket 16 eingefügt ist. Fig. 3 zeigt einen Schnitt durch einen Teilbereich eines Umfangs des Verbunds aus Blechpaket 14 mit darin eingefügtem und ausgerichteten Fügewerkzeug 42.

Das Bauteil 16 ist ringförmig ausgebildet und weist die Anordnung 34 nach innen offener Nuten 14 mit Nutbegrenzungen 36 dazwischen auf. Bei den gezeigten Ausführungsbeispielen sind die Nuten 14 des Blechpakets 18 jeweils mit einer Nutisolierung in Form eines Isolationspapiers 48 isoliert.

Das Fügewerkzeug 42 weist eine Anordnung von um eine zentrale Achse herum verteilt angeordneten Leitblechen 50 auf, die Werkzeugnuten 52 begrenzen, in denen die geradlinigen Leiterabschnitte 38 der Spulenwicklung 12 aufnehmbar sind. Die Leitbleche 50 dienen als Führungselemente zur Führung der Leiterabschnitte 38 beim Überführen.

Zum Einbringen werden die geradlinigen Leiterabschnitte 38 beispielsweise mittels radial nach außen bewegter Schieber 54 des Fügewerkzeugs 42 in die Nuten 16 eingeschoben. Dabei wird die Spulenwicklung 12 von dem kleineren Durchmesser, mit der sie komprimiert auf dem Fügewerkzeug aufliegt, auf den größeren Durchmesser, mit der sie im Betrieb in dem Bauteil 16 eingesetzt ist, expandiert.

Fig. 4 zeigt den Expansionsvorgang. Beim Einführen der einzelnen Leiter 44.1-44.4 wird der Abstand X1 zwischen den geradlinigen Leiterabschnitten 38, die jeweils durch einen gemeinsamen Wicklungskopf 40 miteinander verbunden sind, auf den Abstand X2 vergrößert.

Kurz zusammengefasst werden bei der Statorherstellung mit dem Verfahren "Wellenwicklung" die Drahtspulen in den Innendurchmesser des Blechpaketes 14 gefügt und anschließend nach außen hin expandiert.

Bei dieser Expansion werden die Leiter 44.1-44.4 um einen bestimmten Betrag geweitet (X1 zu X2). Hierbei muss eine Verformungsenergie aufgewendet werden. Zudem muss verhindert werden, dass die Leiter 44.1-44.4 oder die Isolationspapiere 18 beschädigt werden. Insbesondere soll die Isolationsschicht der Leiter 44.1-44.4 auch bei in schneller Taktfolge durchgeführter Herstellung unversehrt bleiben.

Aus diesem Grunde werden, wie dies in Fig. 4 dargestellt ist, die Stützfinger 28 beim Expandieren zugestellt. Diese Stützfinger 28 bilden eine definierte Biegekante und dienen zur Führung, um die Leiter 44.1-44.4, das Isolationspapier 48 und das Blechpaket 18 zu schützen.

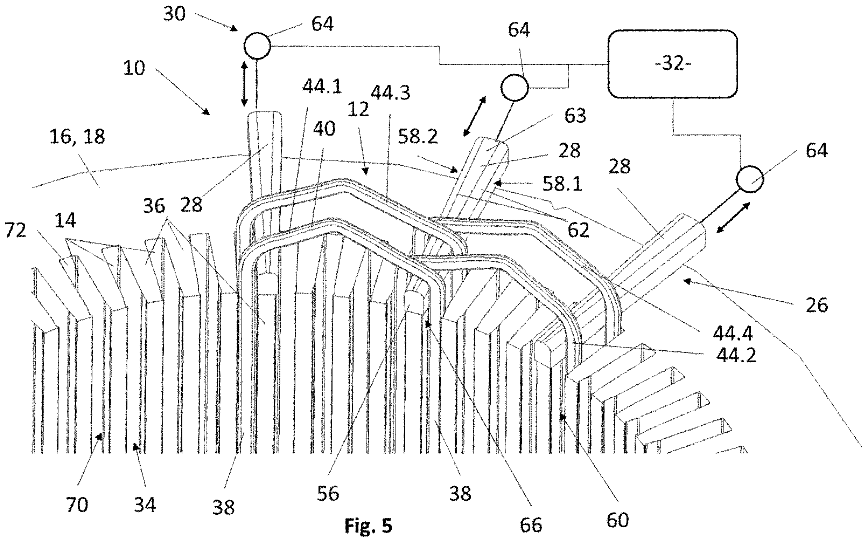

Aus Übersichtsgründen sind in den Fig. 4 und 5 nur vier der Leiter 44.1-44.4 und auch nur drei Stützfinger 28 dargestellt. Wie sich aus Fig. 1 bis 3 ergibt, sind in der Praxis weitaus mehr Leiter, wie insbesondere Drähte, einzuführen, und dementsprechend werden in der Praxis auch mehr Stützfinger 28 eingesetzt. Insbesondere weist die Anordnung 26 von Stützfingern pro Nutbegrenzung 36 einen Stützfinger 28 auf.

Die Stützfinger 28 sind keilförmig und von radial außen nach radial innen gesehen verjüngt ausgebildet. Insbesondere weisen die Stützfinger 28 ein radial inneres Ende 56 mit einem kleineren Querschnitt als weiter radial außen auf. Das radial innere Ende 56 weist insbesondere eine in Umfangsrichtung und Axialrichtung verlaufende Endfläche auf.

Jeder Stützfinger 28 hat eine erste und eine zweite Seitenfläche 58.1, 58.2, die im Wesentlichen in axialer und radialer Richtung verlaufen und sich von radial außen nach radial innen gesehen einander annähern. An diesen Seitenflächen 58.1, 58.2 liegen die in den Wicklungskopf 40 übergehenden Enden der geradlinigen Leiterabschnitte 38 an.

Die Stützfinger 28 werden zu Beginn des Fügevorganges in einer in Fig. 5 gezeigten Grundstellung 66 bereitgestellt. In der Grundstellung überdecken die Stützfinger 28 jeweils eine in die axiale Richtung weisende Endfläche einer der Nutbegrenzungen 36 vollständig.

In der Grundstellung 66 sind die Stützfinger 28 insbesondere derart angeordnet, dass die Seitenflächen 58.1, 58.2 der Stützfinger 28, die im Wesentlichen in axialer und radialer Richtung verlaufen, mindestens mit zur Mitte der Nut 14 hin weisenden Nutseiten 60 fluchten. Bei der Ausführung von Fig. 5 stehen die Seitenfläche 58.1, 58.2 in Umfangsrichtung über Kanten der Nutbegrenzungen 36 und über die zur Mitte der Nut 14 hin weisenden Nutseiten 60 hinweg zur Mitte der jeweils begrenzten Nut 14 hin vor.

Die Stützfinger 28 weisen außerdem abgerundete oder an Eckkanten 62 abgeflachte im Wesentlichen in Axialrichtung weisende Oberseiten 63 auf. Die Eckkanten 62 sind zum Abstützen der seitlichen gebogenen Bereiche Wicklungsköpfe 40 ausgebildet.

Der Stützfingerbewegungsmechanismus 30 ist zur radialen Bewegung der Stützfinger 28 ausgebildet. Dies ist in Fig. 5 durch mehrere Bewegungseinheiten 64 angedeutet. Dies können einzelne Aktoren sein, die durch die Steuerung 30 angesteuert werden, oder Umsetzelemente eines Getriebes, das die Bewegung eines durch die Steuerung 30 angesteuerten Aktors in eine Radialbewegung aller angeschlossener Stützfinger 28 umwandelt. Beispiele für derartige Getriebe sind aus [14] und [15] bekannt.

Bei einem nicht von der Erfindung umfassten Vergleichsbeispiel des Fügeverfahrens werden die Stützfinger 28 nur am Anfang des Fügeverfahrens zugestellt und bleiben bis zum Ende des Prozesses an Position.

Beim Expanieren der Leiter 44.1-44.4 wird sehr viel Kraft aufgrund der nötigen Drahtverformung benötigt. Zudem entsteht viel Reibung zwischen den Leitern 44.1-44.4 / bzw. den Spulen, zwischen den Leitern 44.1-44.4 und den Stützfingern 28 und zwischen den Leitern 44.1-44.4 und den Isolationspapieren 18 bzw. dem Stator.

Besonders die Reibungen zwischen Stützfingern 28 und Leitern 44.1-44.4 sind bei dem Vergleichsbeispiel sehr hoch.

Durch die resultierenden Kräfte, die während des Expandierens auftreten, drücken die äußeren Lagen von Leitern 44.1-44.4 mit so hoher Kraft auf die innenliegenden, dass Beschädigungen zwischen den Leitern 44.1-44.4 entstehen können ("Draht zu Draht"-Beschädigung). Diese Beschädigungen können zu einem Ausfall des Stators führen.

Mit den Fügeverfahren und den Fügevorrichtungen 10 gemäß Ausführungsbeispielen der Erfindung sollen die Kräfte beim Expandieren so weit wie möglich reduziert werden.

Hierbei wird gegenüber dem Vergleichsbeispiel der Ablauf derartig verändert, dass die einzelnen Kräfte nicht mehr zeitgleich, sondern zeitversetzt auftreten. Dadurch können sich die Kräfte nicht addieren und die Gesamtbelastung auf die Drähte bleibt möglichst gering.

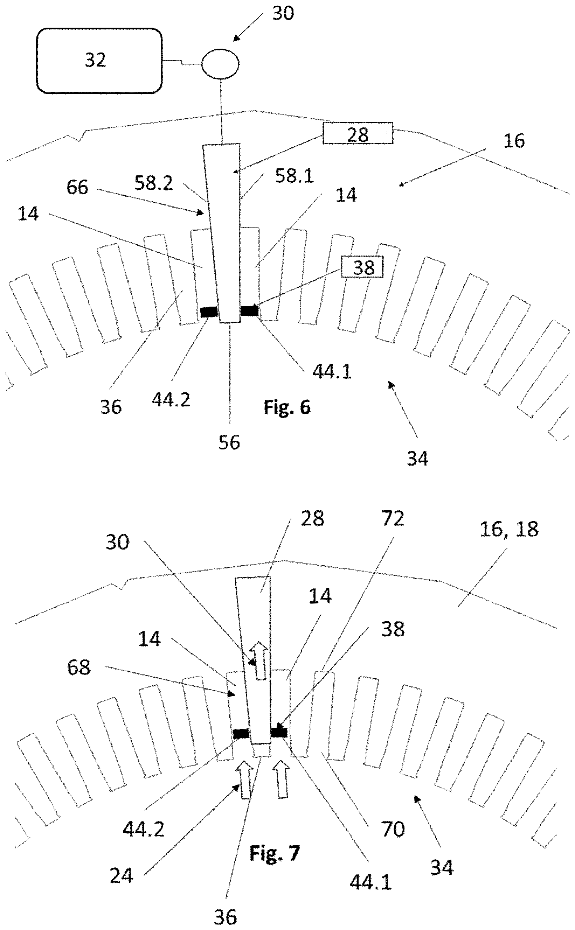

Wie in Fig. 6 und 7 gezeigt, werden hierzu die ohnehin zum Zustellen beweglich ausgeführten Stützfinger 28 mit dem Expandiervorgang synchronisiert, damit sie beim Expandieren mit den Leitern 44.1-44.4 nach außen mitfahren können.

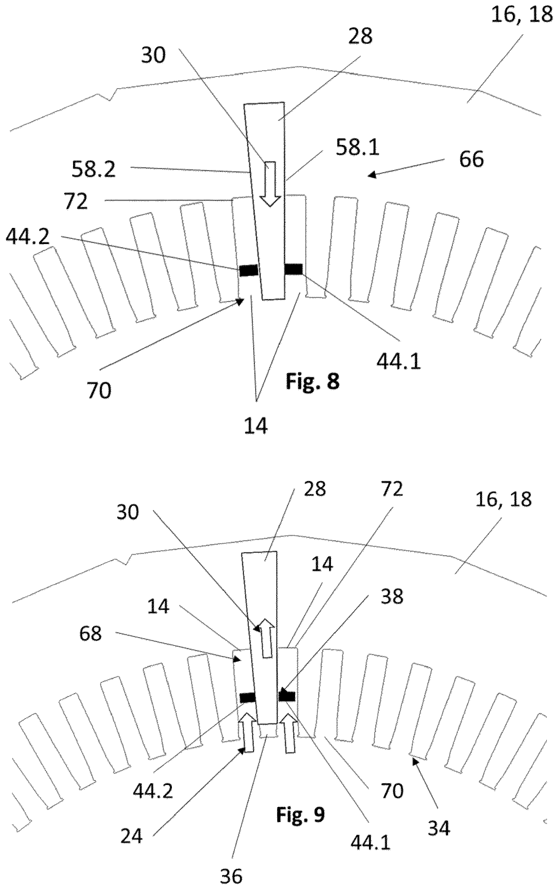

Wie weiter in den Fig. 8 und 9 dargestellt ist, stoppt bei der dargestellten Ausführungsform der Expandiervorgang nach einem bestimmten Hub, die Stützfinger 28 werden wieder zugestellt und der Vorgang wiederholt sich, bis die Leiter 44.1-44.4 der Spulenwicklung 12 vollständig expandiert sind. Mit diesem schrittweise mitfahrenden Stützfinger 28 wird die Reibung zwischen Stützfinger 28 und Leiter 44.1-44.4 während dem Expandiervorgang herausgenommen, ohne dass die Funktion des Stützfingers 28 verloren geht.

Die Stützfinger 28 wirken bei diesem Prinzip unterstützend, indem die Reibung zwischen Leiter 44.1-44.4 und Stützfinger 28 als ziehende Kraft für das Expandieren genutzt wird.

Im Einzelnen zeigt Fig. 6 das Zustellen des Stützfingers 28 in der Grundstellung 66 und das anfängliche Einfügen der Leiter 44.1, 44.2. Fig. 7 zeigt, wie Leiter 44.1, 44.2 und Stützfinger 28 gemeinsam radial nach außen fahren. Beispielsweise werden die Stützfinger 28 mit der Spulenwicklung 12 aus der Grundstellung 66 über eine Teilstrecke bis zu einer radialen Zwischenposition 68 zwischen der radial nach innen offenen Mündung 70 und dem radial außen liegenden Nutgrund 72 der zugeordneten Nut 14 mitbewegt. In dieser radialen Zwischenposition 68 - Umkehrposition - erfolgt eine Umkehr der Bewegung der Stützfinger 28.

Wie man Fig. 6 und 7 entnehmen kann, liegen in der Grundstellung 66 Leiter 44.1, 44.2 der Spulenwicklung 12 an den Seitenflächen 58.1, 58.2 der Stützfinger 28, an. In der Zwischenposition 68 liegen die Leiter 44.1, 44.2 immer noch an den Seitenfläche 58.1, 58.2 an oder beginnen gerade, an zur Nutmitte hin weisenden Nutwänden anzuliegen.

Wie man Fig. 8 entnehmen kann, werden die Leiter 44.1, 44.2 beim Zurückführen der Stützfinger 28 an deren Seitenflächen 58.1, 58.2 in Umfangsrichtung gedrängt.

Fig. 8 zeigt das Nachfahren des Stützfingers 28. Der Stützfinger 28 kann z.B. wieder in die Grundposition 66 zurückgefahren werden. Denkbar ist auch, dass der Stützfinger 28 in eine weitere Zwischenposition (nicht dargestellt) zwischen der Grundstellung 66 und der in Fig. 7 gezeigten Umkehrposition 68 gefahren wird. Fig. 9 zeigt das erneute gemeinsame Fahren von Stützfinger 28 und Leitern 44.1, 44.2 radial nach außen.

Durch die zeitliche Auftrennung der Kräfte wird der Prozess stabiler und die Gefahr für Drahtbeschädigungen reduziert sich.

### Bezugszeichenliste:

- 10: Fügevorrichtung
- 12: Spulenwicklung
- 14: Nut (Bauteil)
- 16: Bauteil
- 18: Blechpaket
- 20: Stator
- 22: Halterung
- 24: Fügeeinrichtung
- 26: Anordnung Stützfinger
- 28: Stützfinger
- 30: Stützfingerbewegungsmechanismus
- 32: Steuerung
- 34: Anordnung Nuten
- 36: Nutbegrenzung
- 38: geradlinige Leiterabschnitt
- 40: Wicklungskopf
- 42: Fügewerkzeug
- 44.1-44-4: Leiter
- 46: Anordnung Fügevorrichtung - Bauteil - Spulenwicklung
- 48: Isolationspapier
- 50: Leitblech
- 52: Werkzeugnut
- 54: Schieber
- 56: radial inneres Ende
- 58.1: erste Seitenfläche
- 58.2: zweite Seitenfläche
- 60: Nutseite
- 62: Eckkante
- 63: Oberseite
- 64: Bewegungseinheit
- 66: Grundstellung
- 68: Zwischenposition (Umkehrposition)
- 70: Mündung der Nut
- 72: Nutgrund

## Patentansprüche

1. Fügeverfahren zum Einfügen einer Spulenwicklung (12) in ein Bauteil (16) einer elektrischen Maschine, umfassend:
a) Bereitstellen des Bauteils (16) mit einer ringförmigen Anordnung (34) von nach innen öffnenden Nuten (14), die durch nach innen ragende Nutbegrenzungen (36) begrenzt sind,
b) Bereitstellen der mit einem Spulendurchmesser, der gleich einem oder kleiner als ein Innendurchmesser der ringförmigen Anordnung (34) ist, aufgewickelten Spulenwicklung (12) innerhalb der ringförmigen Anordnung (34), wobei die Spulenwicklung (12) eine Vielzahl geradliniger Leitungsabschnitte (38), die durch Wicklungsköpfe (40) verbunden sind, aufweist,
c) Bereitstellen von radial beweglichen Stützfingern (28) axial neben den Nutbegrenzungen (36),
d) Expandieren der Spulenwicklung (12) nach außen unter Einführen der Leiterabschnitte (38) der Spulenwicklung (12) in die Nuten (14), und
e) Mitbewegen der Stützfinger (28) radial mit der Spulenwicklung (12), um Leiterabschnitte (38) und/oder Wicklungsköpfe (40) beim Einfügen zu führen.

2. Fügeverfahren nach Anspruch 1, **dadurch gekennzeichnet,**
**dass** Schritt a) wenigstens einen oder mehrere der Schritte umfasst:
a1) Bereitstellen eines ringförmigen Grundkörpers eines Stators;
a2) Bereitstellen eines Blechpakets (18) eines Stators,
a3) Bereitstellen des Bauteils (16) mit Isolationspapieren (48) in den einzelnen Nuten (14).

3. Fügeverfahren nach einem der voranstehenden Ansprüche, **dadurch gekennzeichnet,**
**dass** Schritt b) wenigstens einen oder mehrere der folgenden Schritte umfasst:
b1) Bereitstellen einer aus einzelnen Wellenwicklungsdrähten gebildeten Spulenmatte zum Bilden der Spulenwicklung (12);
b2) Bereitstellen der Spulenwicklung (12) aus Drähten mit rechteckigem Drahtquerschnitt;
b3) Bereitstellen der Spulenwicklung (12) aus Drähten mit Isolierschicht;
b4) Bereitstellen der Spulenwicklung (12) auf einem Fügewerkzeug (42), das in den Innenraum innerhalb des Bauteils (16) mit der ringförmigen Anordnung (34) von nach innen offenen Nuten (14) eingefügt wird;
b5) Komprimieren der Spulenwicklung (12) mit geringerem Durchmesser auf einem Fügedorn als Fügewerkzeug (42);
b6) Bereitstellen der Spulenwicklung derart, dass die geradlinigen Leiterabschnitte (38) in Fügewerkzeugnuten (52) zwischen radial beweglichen Führungselementen (22) eingefügt sind.

4. Fügeverfahren nach einem der voranstehenden Ansprüche, **dadurch gekennzeichnet,**
**dass** Schritt c) wenigstens einen oder mehrere der folgenden Schritte umfasst:
c1) Bereitstellen je eines Stützfingers (28) pro Nutbegrenzung (36) des Bauteils (16);
c2) Bereitstellen von keilförmigen Stützfingern (28), die von radial außen nach radial innen gesehen verjüngt ausgebildet sind;
c3) Bereitstellen der Stützfinger (28) mit einer ersten und einer zweiten Seitenfläche (58.1, 58.2), die im Wesentlichen in axialer und radialer Richtung verlaufen und sich von radial außen nach radial innen gesehen einander annähern,
c4) Bereitstellen von Stützfingern (28) in einer Grundstellung derart, dass sie jeweils eine in die axiale Richtung weisende Endfläche einer der Nutbegrenzungen (36) vollständig überdecken;
c5) Bereitstellen von Stützfingern (28) in einer Grundstellung derart, dass Seitenflächen (58.1, 58.2) der Stützfinger (28), die im Wesentlichen in axialer und radialer Richtung verlaufen, mindestens mit zur Mitte der Nut (14) hin weisenden Nutseiten (60) fluchten oder in Umfangsrichtung über Kanten der Nutbegrenzungen (36) und/oder über die zur Mitte der Nut (14) hin weisenden Nutseiten (60) hinweg zur Mitte der jeweils begrenzten Nut (14) hin vorstehen,
c6) Bereitstellen von Stützfingern (28) mit abgerundeten oder an Eckkanten (62) abgeflachten im Wesentlichen in Axialrichtung weisenden Oberseiten (63);
c7) Bereitstellen einer ringförmigen Anordnung (26) von Stützfingern (28) an einem Stützfingerbewegungsmechanismus (30) zur radialen Bewegung der Stützfinger (28).

5. Fügeverfahren nach einem der voranstehenden Ansprüche, **dadurch gekennzeichnet,**
**dass** Schritt d) wenigstens einen oder mehrere der folgenden Schritte umfasst:
d1) Auferlegen einer radial nach außen gerichteten Kraft auf Leiter (44.1-44.4) der Spulenwicklung (12), um diese radial nach außen zu expandieren und in die Nuten (14) einzufügen;
d2) Auferlegen einer radial gerichteten Kraft auf Wellenwicklungsköpfe (40) der Spulenwicklung (12).

6. Fügeverfahren nach einem der voranstehenden Ansprüche, **dadurch gekennzeichnet,**
**dass** Schritt e) die Schritte umfasst:
e1) Mitbewegen der Stützfinger (28) mit der Spulenwicklung (12) aus einer Grundstellung (66) über eine Teilstrecke bis zu einer radialen Zwischenposition (68) zwischen der radial nach innen offenen Mündung (70) und dem radial außen liegenden Nutgrund (72) der zugeordneten Nut (14),
e2) Zurückführen der Stützfinger (28) aus der Zwischenposition (68) in die Grundstellung (66) oder in eine weitere, der Grundstellung näher liegende Zwischenposition, und
e3) Wiederholen der Schritte e1) und e2).

7. Fügeverfahren nach Anspruch 6, **dadurch gekennzeichnet,**
**dass** die Schritte e1) und e2) derart durchgeführt werden, dass in der Grundstellung (66) Leiter (44.1, 44.2) der Spulenwicklung (12) an Seitenflächen (58.1, 58.2) der Stützfinger (28), die im Wesentlichen in axialer und radialer Richtung verlaufen, anliegen und in der Zwischenposition (68) die Leiter (44.1, 44.2) immer noch an den Seitenflächen (58.1, 58.2) anliegen oder an zur Nutmitte hin weisenden Nutwänden anliegen und beim Zurückführen der Stützfinger (28) an deren Seitenflächen (58.1, 58.2) in Umfangsrichtung gedrängt werden.

8. Fügevorrichtung (10) zum Einfügen einer Spulenwicklung (12) in ein Bauteil (16) einer elektrischen Maschine, umfassend:
eine Halterung (22) für das Bauteil (16), das mit einer ringförmigen Anordnung (34) von nach innen öffnenden Nuten (14), die durch nach innen ragende Nutbegrenzungen (36) begrenzt sind, versehen ist;
eine Fügeeinrichtung (24) mit einem Fügewerkzeug (42), das zum Anordnen der mit einem Spulendurchmesser, der gleich einem oder kleiner als ein Innendurchmesser der ringförmigen Anordnung ist, aufgewickelten Spulenwicklung (12), die eine Vielzahl geradliniger Leitungsabschnitte (38), die durch Wicklungsköpfe (40) verbunden sind, innerhalb der ringförmigen Anordnung (34) ausgebildet ist, wobei die Fügeeinrichtung (24) zum Expandieren der Spulenwicklung (12) nach außen unter Einführen der Leiterabschnitte (38) der Spulenwicklung (12) in die Nuten (14) ausgebildet ist,
eine Anordnung (26) von radial beweglichen Stützfingern (28) axial neben den Nutbegrenzungen (36) und einen Stützfingerbewegungsmechanismus (30) zum radialen Bewegen der Stützfinger (28),
und eine Steuerung (32), die dazu ausgebildet ist, den
Stützfingerbewegungsmechanismus (30) abhängig von der Expansionsbewegung durch die Spulenwicklung (12) mittels der Fügeeinrichtung (24) derart zu steuern, dass sich die Stützfinger (28) radial mit der Spulenwicklung (12) mitbewegen, um Leiterabschnitte (38) und/oder Wicklungsköpfe (40) beim Einfügen zu führen.

9. Fügevorrichtung (10) nach Anspruch 8, **dadurch gekennzeichnet, dass** die Anordnung (26) von Stützfingern (28):
9.1 je einen Stützfinger (28) pro Nutbegrenzung (36) des Bauteils (16) umfasst; und/oder
9.2 keilförmige Stützfinger (28) aufweist, die von radial außen nach radial innen gesehen verjüngt ausgebildet sind; und/oder
9.3 Stützfinger (28) mit einer ersten und einer zweiten Seitenfläche (58.1, 58.2), die im Wesentlichen in axialer und radialer Richtung verlaufen und sich von radial außen nach radial innen gesehen einander annähern, aufweist; und/oder
9.4 zum Zustellen der Stützfinger (28) in einer Grundstellung (66) derart ausgebildet ist, dass die Stützfinger (28) jeweils eine in die axiale Richtung weisende Endfläche der jeweiligen Nutbegrenzungen (36) vollständig überdecken; und/oder
9.5 zum Zustellen der Stützfinger (28) in einer Grundstellung (66) derart ausgebildet ist, dass Seitenflächen (58.1, 58.2) der Stützfinger (28), die im Wesentlichen in axialer und radialer Richtung verlaufen, mindestens mit zur Mitte der Nut hin weisenden Nutseiten (60) fluchten oder in Umfangsrichtung über Kanten der Nutbegrenzungen (36) und/oder über die zur Mitte der Nut (14) hin weisenden Nutseiten (60) hinweg zur Mitte der jeweils begrenzten Nut (14) hin vorstehen, und/oder
9.6 Stützfinger (28) mit abgerundeten oder an Eckkanten (62) abgeflachten im Wesentlichen in Axialrichtung weisenden Oberseiten (63) aufweisen.

10. Fügevorrichtung (10) nach einem der Ansprüche 8 oder 9, **dadurch gekennzeichnet,**
**dass** die Steuerung (32) dazu ausgebildet ist, den Stützfingerbewegungsmechanismus (30) anzusteuern zum
e1) Mitbewegen der Stützfinger (28) mit der mittels der Fügeeinrichtung (24) expandierten Spulenwicklung (12) aus einer Grundstellung (66) über eine Teilstrecke der radialen Expansionsbewegung bis zu einer Zwischenposition (68),
e2) Zurückführen der Stützfinger (28) aus der Zwischenposition (68) in die Grundstellung (66) oder in eine weitere, der Grundstellung näher liegende Zwischenposition und
e3) Wiederholen der Schritte e1) und e2).

11. Fügevorrichtung (10) nach Anspruch 10, **dadurch gekennzeichnet,**
**dass** die Steuerung (32) weiter dazu ausgebildet ist, den Stützfingerbewegungsmechanismus (30) derart anzusteuern, dass in der Grundstellung (66) Leiter (44.1, 44.2) der Spulenwicklung (12) an Seitenflächen (58.1, 58.2) der Stützfinger (28), die im Wesentlichen in axialer und radialer Richtung verlaufen, anliegen und in der Zwischenposition (68) die Leiter (44.1, 44.2) immer noch an den Seitenflächen (58.1, 58.2) anliegen oder an zur Nutmitte hin weisenden Nutwänden anliegen und beim Zurückführen der Stützfinger (28) an deren Seitenflächen (58.1, 58.2) in Umfangsrichtung gedrängt werden.

12. Anordnung (46) umfassend eine Fügevorrichtung (10) nach einem der Ansprüche 8 bis 11, das Bauteil (16) mit der ringförmigen Anordnung (34) nach innen öffnender Nuten (14) und die in das Bauteil (16) mittels der Fügevorrichtung (10) einzufügende Spulenwicklung(12).

13. Anordnung (46) nach Anspruch 12, **dadurch gekennzeichnet,**
**dass** das Bauteil (16)
13a.1 ein ringförmiger Grundkörper eines Stators ist; und/oder
13a.2 ein Blechpaket (18) eines Stators ist; und/oder
13a.3 Isolationspapiere (48) in den einzelnen Nuten (14) aufweist, und/oder dass die Spulenwicklung (12)
13b.1 eine aus einzelnen Wellenwicklungsdrähten gebildete Spulenmatte aufweist; und/oder
13b.2 eine Spulenmatte aus Drähten mit rechteckigem Drahtquerschnitt aufweist; und/oder
13b.3 eine Spulenmatte aus Drähten mit Isolierschicht aufweist.

14. Steuerung (32) für eine Fügevorrichtung (10) nach einem der Ansprüche 8 bis 11 oder eine Anordnung nach einem der Ansprüche 12 bis 13, dazu eingerichtet, die Fügevorrichtung (10) zum Durchführen des Fügeverfahrens nach einem der Ansprüche 1 bis 7 anzusteuern.

15. Computerprogramm, umfassend Anweisungen, die die Fügevorrichtung (10) nach einem der Ansprüche 8 bis 11 oder die Fügevorrichtung (10) der Anordnung (46) nach einem der Ansprüche 12 bis 13 dazu veranlassen, das Fügeverfahren nach einem der Ansprüche 1 bis 7 durchzuführen.
